# EUROPÄISCHE PATENTSCHRIFT

(11) **EP 3 365 741 B1**
(45) Veröffentlichungstag und Bekanntmachung des Hinweises auf die Patenterteilung: **12.12.2018**
(21) Anmeldenummer: 16815791.5
(22) Anmeldetag: 13.12.2016
(51) Int. Cl.: G05D 7/01, G05D 1/00, G05D 1/02, G08G 1/0967, B60W 30/12, B60W 50/00, B60W 30/16

(54) **VERFAHREN ZUR VOLLAUTOMATISCHEN FÜHRUNG EINES FAHRZEUGSYSTEMS UND KRAFTFAHRZEUG**
METHOD FOR FULLY AUTOMATIC GUIDANCE OF A VEHICLE SYSTEM AND CORRESPONDING MOTOR VEHICLE
PROCÉDÉ DE CONDUITE DE VÉHICULES ENTIÈREMENT AUTOMATISÉE ET VÉHICULE AUTOMOBILE CORRESPONDANT

(30) Priorität: 19.01.2016 DE 102016000493
(43) Veröffentlichungstag der Anmeldung: 29.08.2018
(73) Patentinhaber: Audi AG, 85045 Ingolstadt (DE)
(72) Erfinder: NETTER, Florian, 85049 Ingolstadt (DE)
(86) Internationale Anmeldenummer: PCT/EP2016/080797
(87) Internationale Veröffentlichungsnummer: WO 2017/125209

(56) Entgegenhaltungen:
- WO-A1-2005/052883
- DE-A1- 4 209 150
- DE-A1-102008 057 199
- DE-B4- 4 447 642
- US-A- 5 751 915

## Beschreibung

Die Erfindung betrifft ein Verfahren zum Betrieb eines zur vollautomatischen Führung eines Kraftfahrzeugs in verschiedenen Fahrsituationsklassen ausgebildeten Fahrzeugsystems des Kraftfahrzeugs, wobei
- eine mehrere Auswertungseinheiten umfassende Berechnungsstruktur verwendet wird, um aus die Umgebung des Kraftfahrzeugs beschreibenden Umgebungsdaten und den Zustand des Kraftfahrzeugs beschreibenden Egodaten als Fahrsituationsdaten zur vollautomatischen Führung des Kraftfahrzeugs zu verwendende Steuerdaten zu ermitteln und zur Führung des Kraftfahrzeugs zu verwenden,
- jede Auswertungseinheit aus Ausgangsdaten wenigstens einer weiteren Auswertungseinheit und/oder Fahrsituationsdaten Ausgangsdaten ermittelt, und
- wenigstens ein Teil der Auswertungseinheiten als neuronales Netz wenigstens teilweise auf Softwarebasis ausgebildet sind. Daneben betrifft die Erfindung ein Kraftfahrzeug.

Ein aktuelles Thema der Forschung und Entwicklung ist die vollautomatische Führung von Kraftfahrzeugen mittels eines entsprechenden Fahrzeugsystems ("pilotiertes Fahren"). Ein Fahrzeugsystem, welches die Führung des Kraftfahrzeugs vollständig, insbesondere also die Längs- und die Querführung, übernehmen soll, muss Fahrsituationsdaten auswerten, die zum einen als Umgebungsdaten die Umgebung des Kraftfahrzeugs beschreiben, zum anderen als Egodaten den aktuellen Zustand des Kraftfahrzeugs, insbesondere hinsichtlich der Dynamik. Umgebungsdaten können dabei sowohl durch Messungen von Umgebungssensoren, beispielsweise Kameras, Radarsensoren und dergleichen, gewonnen werden, es ist jedoch auch denkbar, anderweitig Informationen zu erlangen, beispielsweise durch Kraftfahrzeug-zu-Kraftfahrzeug-Kommunikation, Kraftfahrzeug-zu-Infrastruktur-Kommunikation und/oder aus digitalen Karten, insbesondere im Zusammenhang mit einer aktuellen Positionsinformation des Kraftfahrzeugs. Egodaten, beispielsweise die aktuelle Geschwindigkeit des Kraftfahrzeugs, aktuelle Beschleunigungswerte und dergleichen werden meist ohnehin innerhalb des Kraftfahrzeugs gewonnen, sei es durch Eigensensorik, sei es durch Abfrage von Betriebsparametern anderer Fahrzeugsysteme. Zur kompakten Abbildung von Umgebungsdaten wurden im Stand der Technik auch bereits Umgebungsmodelle vorgeschlagen.

Diese Fahrsituationsdaten müssen durch eine Berechnungsstruktur, die Hardware- und/oder Softwarekomponenten umfassen kann, ausgewertet werden und in Steuerdaten umgesetzt werden, die die weitere Bewegung des Kraftfahrzeugs bestimmen und zur Ansteuerung entsprechender weiterer Fahrzeugsysteme, beispielsweise eines Motors, eines Bremssystems, eines Lenksystems und dergleichen, verwendet werden. Hierzu werden üblicherweise verschiedene, als eigene Auswertungseinheiten auffassbare Algorithmen verwendet, die sowohl durch Hardware als auch durch Software realisiert werden können. Derartige Auswertungseinheiten, die innerhalb der Berechnungsstruktur Eingangsdaten, welche Fahrsituationsdaten und/oder Ausgangsdaten anderer Auswertungseinheiten umfassen können, in Ausgangsdaten, welche auch bereits Steuerdaten enthalten können, umwandeln, werden häufig auch als "Entscheider" bezeichnet, nachdem durch sie die notwendigen Entscheidungen für die jeweiligen Manöver während des vollautomatischen Betriebs des Kraftfahrzeugs getroffen werden.

Im Einsatz befinden sich zur Realisierung solcher Auswertungseinheiten derzeit hauptsächlich Vorgehensweisen aus dem Bereich der Logik und der Algorithmen, welche für festgelegte Situationen mit ausgewählten Parametern die notwendigen Entscheidungen berechnen. Hieraus ergibt sich aber beim vollautomatischen Betrieb des Kraftfahrzeugs das Problem, dass für alle Eventualitäten inklusive deren Kombinatorik der physikalischen Welt ein entsprechender Entscheidungsalgorithmus bzw. eine entsprechende Entscheidungslogik zu realisieren wäre. Während sich Derartiges bereits für nur in bestimmten Fahrsituationen, beispielsweise beim Einparken, nutzbare Fahrzeugsysteme als schwierig erweist, potenziert sich dieses Problem bei in mehreren Fahrsituationsklassen einzusetzenden Fahrzeugsystemen derart, dass es letztlich unmöglich ist, alle möglichen auftretenden Fahrsituationen zu berücksichtigen. Nutzt man übliche Entscheidungsalgorithmen und/oder Entscheidungslogiken, ist ein automatisches Adaptieren der fest programmierten Software bzw. vorgegebenen Hardware auf neue und unbekannte Fahrsituationen aufgrund der festen und starren Realisierung nicht möglich.

Mithin wurde im Stand der Technik bereits vorgeschlagen, zumindest für bestimmte, überschaubare Anwendungen, beispielsweise Geschwindigkeitsregelautomaten, neuronale Netze als künstliche Intelligenz einzusetzen, vgl. beispielsweise DE 44 25 957 C1. Neuronale Netze, die auch als künstliche neuronale Netzwerke bezeichnet werden, englisch "artificial neuronal network", sind Netze aus künstlichen Neuronen. Ein derartiges neuronales Netz weist eine bestimmte Topologie, also eine Zuordnung von Verbindungen zu Knoten, auf, wobei jedem Neuron letztlich eine Gewichtung, ein Schwellenwert und/oder eine Aktivierungsfunktion zugeordnet werden können. In einer Trainingsphase wird ein neuronales Netz aufgrund von Situationen trainiert, um danach in ähnlichen Situationen korrekte Entscheidungen treffen zu können.

Im Hinblick auf zur vollautomatischen Führung von Kraftfahrzeugen, insbesondere in mehreren Fahrsituationsklassen, ausgebildete Fahrzeugsysteme tritt jedoch das Problem auf, dass derartige neuronale Netze jeweils nur für bestimmte Verkehrssituationen trainiert werden können, beispielsweise für das intelligente und unfallfreie Durchfahren einer Kreuzung, die Erkennung der Intention von anderen Verkehrsteilnehmern, für Subaspekte automatischer Parkvorgänge, Situationsanalysen auf der Autobahn bei Überholmanövern und dergleichen. Zwar kann innerhalb dieser speziellen Auswertungsfunktion durch das künstliche neuronale Netz generalisiert werden, allerdings ist es aufgrund der Komplexität der Realität nicht möglich, ein neuronales Netz oder eine Gruppe von neuronalen Netzen zu schaffen, die für alle erdenklichen Verkehrssituationen uneingeschränkt angewendet werden können. Allerdings ist es aufgrund der in modernen Kraftfahrzeugen vorhandenen möglichen Rechenleistungen auch nicht möglich, eine äußerst große Anzahl von einzelnen Auswertungsfunktionen durch neuronale Algorithmen zu realisieren.

WO 2014/147 361 A1 offenbart eine Vorrichtung zur Steuerung eines Landfahrzeugs, welches sich selbst fährt oder zumindest zum Teil selbst fährt. Die Idee dort ist es, künstliche Vorhersage unter Verwendung adaptiver modellbasierter Erkennungssteuerungen zu realisieren. Dabei soll ein wesentliches Niveau von Zusammenhangsdenken und Echtzeitkommunikation bei Fusion der verfügbaren Sensoren gegeben sein.

DE 44 25 957 C1 betrifft eine Einrichtung zur Regelung der Fahrgeschwindigkeit eines Kraftfahrzeugs, wobei vorgeschlagen wird, einen Geschwindigkeitsregler mit einem künstlichen neuronalen Netz auszustatten, dem Daten über die momentane Geschwindigkeits-Regeldifferenz und den momentanen Fahrzustand zugeführt werden und das daraus nach vorangegangenem Training anhand eines nicht linearen Fahrzeuglängsdynamikmodells wenigstens ein Stellsignal für den Antriebsstrang generiert. So lassen sich auch geringe Fahrgeschwindigkeit zuverlässiger einregeln.

Der Erfindung liegt daher die Aufgabe zugrunde, bei der vollautomatischen Führung des Kraftfahrzeugs trotz beschränkter Rechenleistungskapazität im Kraftfahrzeug eine Vielzahl von neuronalen Netzen für unterschiedliche Verkehrssituationen umzusetzen und somit die Qualität und Verlässlichkeit der von einer Berechnungsstruktur ermittelten Steuerdaten zu verbessern.

Zur Lösung dieser Aufgabe ist bei einem Verfahren der eingangs genannten Art erfindungsgemäß vorgesehen, dass wenigstens ein Teil der als neuronales Netz ausgebildeten Auswertungseinheiten während der Laufzeit dynamisch aus einem über Konfigurationsparametersätze konfigurierbaren Konfigurationsobjekt gebildet wird, indem
- unter Verwendung wenigstens eines Teils der Fahrsituationsdaten eine aktuelle Fahrsituationsklasse aus mehreren vorgegebenen Fahrsituationsklassen, wobei jeder Fahrsituationsklasse wenigstens eine Auswertungsfunktion zugeordnet ist, ermittelt wird,
- aus einer Datenbank den Auswertungsfunktionen der aktuellen Fahrsituationsklasse zugeordnete Konfigurationsparametersätze abgerufen werden und
- noch nicht vorhandene, die Auswertungsfunktion durchführende Auswertungseinheiten durch Konfiguration von Konfigurationsobjekten mit den abgerufenen Konfigurationsparametersätzen gebildet werden.

Die der Erfindung zugrunde liegende Idee ist es also, die künstliche Intelligenz für die vollautomatische Führung des Kraftfahrzeugs situativ anzupassen, indem für eine aktuelle Fahrsituationsklasse geeignete künstliche neuronale Netze, so noch nicht aktiv, zur Laufzeit, mithin bei der Nutzung der Berechnungsstruktur, erzeugt und in die modulare Berechnungsstruktur eingegliedert werden. Hierzu wird ein Konfigurationsobjekt genutzt, aus dem, wenn ein entsprechender Konfigurationsparametersatz vorliegt, eine Auswertungseinheit geschaffen werden kann, die ein entsprechendes neuronales Netz enthält und die Auswertungsfunktion erzeugt. Der Konfigurationsparametersatz enthält mithin insbesondere Konfigurationsdaten zur Topologie (Neuronenstruktur), zu Aktivierungsfunktionen, zu Gewichten und/oder zu Schwellwerten.

Zur Realisierung des Konfigurationsobjekts existieren erfindungsgemäß mehrere Möglichkeiten. So kann das Konfigurationsobjekt Hardware und/oder Software umfassen. Als Hardware-Basis für insbesondere auch konfigurierbare neuronale Netze bieten sich GPUs, FPGAs und/oder neuronale Chips an. Beispielsweise kann jedes Konfigurationsobjekt einem konfigurierbaren Hardwarebauteil entsprechen. Auf diese Weise wird eine Hardware genutzt, die für die Realisierung neuronaler Netze besonders geeignet ist, so dass die neuronalen Netze schnell und effektiv ausgeführt werden können. Selbstverständlich ist es jedoch auch denkbar, dass wenigstens ein Teil der Konfigurationsobjekte rein softwarebasiert sind, insbesondere also Auswertungseinheiten als Softwareobjekte während der Laufzeit in einer Speichereinrichtung erzeugt und gemäß dem Konfigurationsparametersatz konfiguriert werden. In diesem Fall existiert also beispielsweise eine programmiertechnische Rumpfstrukturklasse zur Realisierung von neuronalen Netzen, wobei als Auswertungseinheit eine konkrete Instanz dieser Rumpfstrukturklasse unter Verwendung des Konfigurationsparametersatzes erzeugt wird. Die erzeugte Instanz stellt dann einen in den Ablauf der gesamten Berechnungsstruktur einbettbaren bzw. eingebetteten Programmteil dar, der entsprechend von anderen Funktionen/Auswertungseinheiten aufgerufen werden kann. Eine derartige, insbesondere rein auf Software basierende Ausgestaltung des Konfigurationsobjekts bietet den Vorteil erhöhter Flexibilität, wobei die Zahlen möglicher neuronaler Netze dann beispielsweise über den zur Verfügung stehenden Arbeitsspeicher beschränkt werden kann.

Die Konfigurationsparametersätze sind in einer Datenbank gespeichert. Um geeignete Konfigurationsparametersätze abrufen zu können, wird zunächst eine Fahrsituationsklasse bestimmt. Fahrsituationsklassen fassen letztlich einen Satz von Betriebsbedingungen zusammen, unter denen das Kraftfahrzeug betrieben werden kann. Im Prinzip umfasst die Fahrsituationsklasse mithin eine Mehrzahl möglicher Fahrsituationen, die dennoch über Gemeinsamkeiten verbunden sind. Fahrsituationsklassen können daher im Allgemeinen auch als Betriebsumgebungen beschrieben werden. Beispielsweise kann vorgesehen sein, dass eine Fahrsituationsklasse sich durch Kombination einer bestimmten Fahrumgebung, beispielsweise Stadtverkehr, Landstraße, Autobahn, Offroad und dergleichen, mit einem Geschwindigkeitsintervall ergibt, um beispielsweise auf Autobahnen noch Stauumgebungen von normalen Autobahn-Betriebsbedingungen unterscheiden zu können und dergleichen. Fahrumgebungen können hierbei beispielsweise über eine digitale Karte eines Navigationssystems des Kraftfahrzeugs bestimmt werden, insbesondere gemeinsam mit einer aktuellen Positionsinformation des Kraftfahrzeugs, insbesondere einer GPS-Information. Die aktuelle Geschwindigkeit des Kraftfahrzeugs ist im Kraftfahrzeug ohnehin bekannt; gegebenenfalls können hier auch mittlere Geschwindigkeiten in einem gleitenden Zeitfenster betrachtet werden.

Jeder Fahrsituationsklasse sind in der Datenbank Auswertungsfunktionen, die in ihr besonders wahrscheinlich benötigt werden, und zugeordnete Konfigurationsparametersätze zugeordnet. Auswertungsfunktionen können beispielsweise Fußgängererkennungen oder Überholentscheider, allgemein gesagt Klassifikatoren, Prädiktoren, beispielsweise der Intention anderer Verkehrsteilnehmer, und/oder Situationsanalysatoren umfassen, die im Rahmen der vorliegenden Erfindung durch neuronale Netze realisiert werden, die durch die Konfigurationsparametersätze im Hinblick auf das Konfigurationsobjekt beschrieben sind. Mit anderen Worten reicht das Vorliegen des Konfigurationsparametersatzes und des Konfigurationsobjektes aus, um eine entsprechende, ein neuronales Netz nutzende Auswertungseinheit dynamisch zu generieren und innerhalb der Berechnungsstruktur in Betrieb zu nehmen.

Letztlich werden also die in verschiedenen Fahrsituationsklassen verschiedenen benötigten neuronalen Netze charakterisierende Daten (Topologie, Parametrierung, etc.) in einer Datenbank gespeichert und situationsgemäß in ein Steuergerät geladen, um das/die entsprechenden neuronalen Netze zu realisieren und aktiv zu schalten. Eine Datenbank erweist sich dabei als besonders nützlich, da die Konfigurationsparameter in einer effizienten und flexiblen Datenstruktur gespeichert werden können.

Ist beispielsweise die Fahrsituationsklasse eine Autobahnfahrt bei höheren Geschwindigkeiten, wird man beispielsweise ein neuronales Netz verwenden, welches speziell auf Überholmanöver und/oder auf Querverkehr bei hohen Geschwindigkeiten abgestimmt und trainiert ist, während ein neuronales Netz, das Fußgänger erkennt und/oder ihre Intention zu prädizieren versucht, nicht in der Berechnungsstruktur aktiv wäre, da bei Autobahnfahrten mit hoher Geschwindigkeit üblicherweise keine Fußgänger zu erwarten sind. Die entsprechenden neuronalen Netze können mithin quasi verworfen bzw. aus dem Speicher geladen werden, sind jedoch in der Datenbank über die entsprechenden Konfigurationsparametersätze noch vorhanden. In diesem Beispiel könnte jedoch bei Stau, also niedrigeren Geschwindigkeiten, wenn die Fahrsituationsklasse also wechselt, durchaus mit Fußgängern gerechnet werden, während Überholmanöver bei höheren Geschwindigkeiten nicht mehr notwendig sind. Mithin kann beispielsweise ein als Klassifikator zur Fußgängererkennung und/oder Fußgängerintentionserkennung wirkendes neuronales Netz dynamisch on-demand geladen und aktiv geschaltet werden. Selbstverständlich sind die hier beispielhaft genannten Fahrsituationsklassen, Auswertungsfunktionalitäten und neuronalen Netze sowie ihre Aufteilung nicht zwangsläufig; eine Vielzahl möglicher Ausgestaltungen ist für den Fachmann denkbar und ersichtlich.

Eine vorteilhafte Ausgestaltung der vorliegenden Erfindung sieht vor, dass die Fahrsituationsklasse selbst durch ein neuronales Netz bestimmt wird. Die Einteilung in Fahrsituationsklassen, insbesondere unmittelbar ausgehend von Fahrsituationsdaten, erweist sich häufig bereits als eine recht komplexe Einschätzungsaufgabe, die selbst über (dann grundsätzlich aktive) neuronale Netze gelöst werden kann.

Wie bereits angedeutet wurde, werden zweckmäßigerweise der aktuellen Fahrsituationsklasse nicht zugeordnete Auswertungsfunktionen ausführende, als neuronale Netze gebildete Auswertungseinheiten deaktiviert und/oder es ist grundsätzlich nur eine maximale Anzahl von auf neuronalen Netzen basierenden Auswertungseinheiten gleichzeitig aktiv. Mit diesem Ansatz besteht die Möglichkeit, die freien und begrenzten Rechenkapazitäten im Kraftfahrzeug für andere Aufgaben oder neuronale Netze zu verwenden. Es entsteht eine größtmögliche Flexibilität und gleichzeitig verbesserte Funktionsqualität des Fahrzeugsystems als Ganzes, da Rechenkapazitäten flexibel an gerade benötigte neuronale Netze vergeben werden können bzw. gerade nicht benötigte Rechenkapazitäten anderweitig genutzt werden können.

Zweckmäßig ist es ferner, wenn wenigstens eine eine Basisfunktion durch ein neuronales Netz realisierende Auswertungseinheit immer aktiv ist. Bestimmte, durch neuronale Netze gelöste Aufgabenstellungen werden unabhängig von der Fahrsituationsklasse in jeder Fahrsituation benötigt. Beispielsweise kann die Basisfunktion eine Objekterkennungs- und/oder Klassifizierungsfunktion sein. In Ausführungsbeispielen können Ausgangsdaten einer solchen eine Basisfunktion realisierenden Auswertungseinheit im Übrigen auch genutzt werden, um die Bestimmung der Fahrsituationsklasse zu verfeinern; beispielsweise ist es möglich, die Aktivierung bestimmter neuronaler Netze bzw. der dynamischen Realisierung von sie realisierenden Auswertungseinheiten an vorherige Situationseigenschaften zu knüpfen, beispielsweise eine Fußgängerintentionserkennung an die Präsenz von Fußgängern zu koppeln und dergleichen. In einem solchen Fall ist also eine sehr spezielle Einteilung bestimmter Fahrsituationsklassen genauso möglich wie eine Adaption/Modifikation bestimmter Zuordnungen zu Fahrsituationsklassen.

Eine spezielle Problematik im Hinblick auf verschiedene bzw. verschieden zu trainierende neuronale Netze ergibt sich auch dadurch, dass regional deutliche Unterschiede in den Randbedingungen existieren können, mithin Varianten für verschiedene Staaten bzw. verschiedene Regionen benötigt werden. Beispielsweise unterscheidet sich der Verkehr in China sehr deutlich von dem Verkehr in Europa, beispielsweise Deutschland, was nicht nur wegen unterschiedlicher gesetzlicher Regelungen in den Staaten gilt. Andere Verkehrsumgebungen können auch durch andere Markierungen, beispielsweise gelbe Mittelstreifen im Vergleich zu weißen Mittelstreifen und/oder das Vorhandensein oder Nichtvorhandensein roter/blauer Parkränder (wie beispielsweise in den USA) und dergleichen, gegeben sein.

Mithin sieht eine vorteilhafte Ausgestaltung der vorliegenden Erfindung auch vor, dass die Fahrsituationsklassen auch einen aktuell befahrenen Staat beschreiben und/oder wenigstens ein für wenigstens einen Staat spezifischer Konfigurationsparametersatz verwendet wird. Auf diese Weise ist letztlich auch eine Art von Variantenmanagement gegeben, beispielsweise für unterschiedliche Staaten. Selbstverständlich lässt sich eine derartige Variantenvielfalt auch auf weitere grundsätzliche Unterscheidungskriterien übertragen, beispielsweise Wetterunterschiede und/oder sonstige regionale Differenzen.

Gerade dann, wenn viele unterschiedliche Auswertungsfunktionen/viele unterschiedliche neuronale Netze realisiert werden sollen, ist es besonders vorteilhaft, wenn, wie eine Ausgestaltung der vorliegenden Erfindung vorsieht, die Konfigurationsparametersätze aus der auf einer kraftfahrzeugexternen, zentralen Recheneinrichtung liegenden Datenbank abgerufen werden. Das bedeutet also, die Datenbank mit den Konfigurationsparametersätzen muss nicht zwangsläufig innerhalb des Kraftfahrzeugs vorliegen, sondern kann auch auf einer kraftfahrzeugexternen, zentralen Recheneinrichtung, beispielsweise einem Server, vorgesehen sein, mit dem das Kraftfahrzeug in einem drahtlosen Kontakt steht. Der drahtlose Kontakt kann über ein Mobilfunknetz und/oder das Internet hergestellt werden.

Eine besonders bevorzugte Ausgestaltung der vorliegenden Erfindung sieht vor, dass bei einem auf ein falsches Ergebnis einer Auswertungseinheit hinweisenden Fahrereingriff ein Fehlerdatensatz der aktuellen Verkehrssituation, insbesondere umfassend Fahrsituationsdaten, die Konfiguration der Berechnungsstruktur und den Fahrereingriff beschreibende Eingriffsdaten, nach Abschluss der Verkehrssituation an eine oder die kraftfahrzeugexterne, zentrale Recheneinrichtung übermittelt wird. Auf diese Weise wird das Problem gelöst, eine größere Zahl unterschiedlicher neuronaler Netze, die in Kraftfahrzeugen eingesetzt werden, ständig aktuell zu halten bzw. vom Verhalten/von der Performance her zu verbessern. Tritt nämlich eine Verkehrssituation bzw. Fahrsituation ein, in welcher das neuronale Netz falsch reagiert, wird beispielsweise bei einem Überholmanöver bei einem Motorrad aufgrund einer Wetterbedingung zu früh eingeschert, muss letztlich der Fahrer eingreifen, um beispielsweise einen Unfall zu vermeiden. Das zugrunde liegende Problem ist, dass bei keinem neuronalen Netz ein hundertprozentig nachvollziehbares Verhalten für alle Situationen berechnet und abgetestet werden kann, sondern lediglich ein statistischer Test möglich ist. Dies steht im Gegensatz zu einem Programmcode, der zu einhundert Prozent deterministisch getestet werden kann.

Es wird nun vorgeschlagen, das vom Fahrer durchgeführte Fahrmanöver, den Fahreingriff, beschrieben beispielsweise durch die Eingriffsdaten, in einem Fehlerdatensatz abzuspeichern, bevorzugt gemeinsam mit allen weiteren relevanten Fehlerdaten, insbesondere den Fahrsituationsdaten sowie der aktuellen Konfiguration der Berechnungsstruktur, wobei dieser Fehlerdatensatz an ein zentrales IT-Backend versendet wird, also eine kraftfahrzeugexterne, zentrale Recheneinrichtung, bei der es sich in einer Ausgestaltung, in der die Konfigurationsparametersätze kraftfahrzeugextern abgerufen werden, bevorzugt um dieselbe kraftfahrzeugexterne, zentrale Recheneinrichtung, auf der die Datenbank liegt, handelt. In der kraftfahrzeugexternen, zentralen Recheneinrichtung werden von allen entsprechend ausgestatteten Kraftfahrzeugen, mithin einer ganzen Fahrzeugflotte, Fehlerdatensätze gesammelt, mithin auch solche für ähnliche Verkehrssituationen (im Beispiel also Fehlerdatensätze für Überholmanöver auf der Autobahn bei bestimmter Geschwindigkeit mit Motorrädern). Diese Fehlerdatensätze können nun genutzt werden, um das entsprechende neuronale Netz zu trainieren, bevorzugt bei Erfüllung einer Trainingsbedingung. Tritt die Trainingsbedingung ein, werden die Fehlerdatensätze zum Trainieren des wenigstens einen in der Verkehrssituation genutzten neuronalen Netzes unter Aktualisierung des zugeordneten Konfigurationsparametersatzes verwendet. Danach wird ein Update des Konfigurationsdatensatzes in den Kraftfahrzeugen durchgeführt, das heißt, es werden die aktualisierten Konfigurationsparametersätze den Kraftfahrzeugen wieder zur Verfügung gestellt, so dass eine Art Schwarmintelligenz gegeben ist. Es besteht mithin die Möglichkeit, durch die Fehlerdatensätze einzelner Kraftfahrzeuge/Fahrer die künstliche Intelligenz der gesamten Fahrzeugflotte zu verbessern. Es entsteht ein kontinuierlicher, durchgängiger Lern- und Trainingsprozess.

Dabei ist es im Übrigen denkbar, dass als Trainingsbedingung das Überschreiten eines Grenzwerts für die Anzahl der für ein neuronales Netz vorliegenden Fehlerdatensätze verwendet wird, wobei jedoch auch andere Trainingsbedingungen eingesetzt werden können. Sollten ferner die Konfigurationsparametersätze nicht ohnehin von der kraftfahrzeugexternen, zentralen Recheneinrichtung abgerufen werden, werden sie an das Kraftfahrzeug übermittelt, wo die entsprechend dort vorliegende Datenbank aktualisiert werden kann. Wird mithin der gleiche Konfigurationsdatensatz, der im Kraftfahrzeug vorliegt, im Backend zum Trainieren verwendet, ist lediglich eine Synchronisierung der Datenbanken erforderlich. Über das flexible Schema in der Datenbank können auch größere Änderungen an den neuronalen Netzen aktualisiert und damit durchgeführt werden.

In diesem Kontext sei angemerkt, dass es die vorliegende Erfindung auch erlaubt, personalisierte bzw. kraftfahrzeugspezifische Konfigurationsparametersätze zu verwenden. In diesem Fall können also für unterschiedliche Kraftfahrzeuge und/oder Fahrer unterschiedliche Konfigurationsparametersätze vorliegen. Erfolgt das Trainieren, insbesondere aufgrund von Fehlerdatensätzen, auch fahrerspezifisch, so das insbesondere bei positiven Fahrentscheidung dessen Fahrstil gelernt werden kann, ist darauf zu achten, dass beim Trainieren im Backend die korrekte, aktuelle Version des personen- bzw. kraftfahrzeugspezifischen Konfigurationsparametersatzes genutzt wird.

Neben dem Verfahren betrifft die vorliegende Erfindung auch ein Kraftfahrzeug, aufweisend ein zur vollautomatischen Führung des Kraftfahrzeugs in verschiedenen Fahrsituationsklassen ausgebildetes Fahrzeugsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Auflaufplan eines Ausführungsbeispiels des erfindungsgemäßen Verfahrens, und
- Fig. 2: ein System mit einem erfindungsgemäßen Kraftfahrzeug.

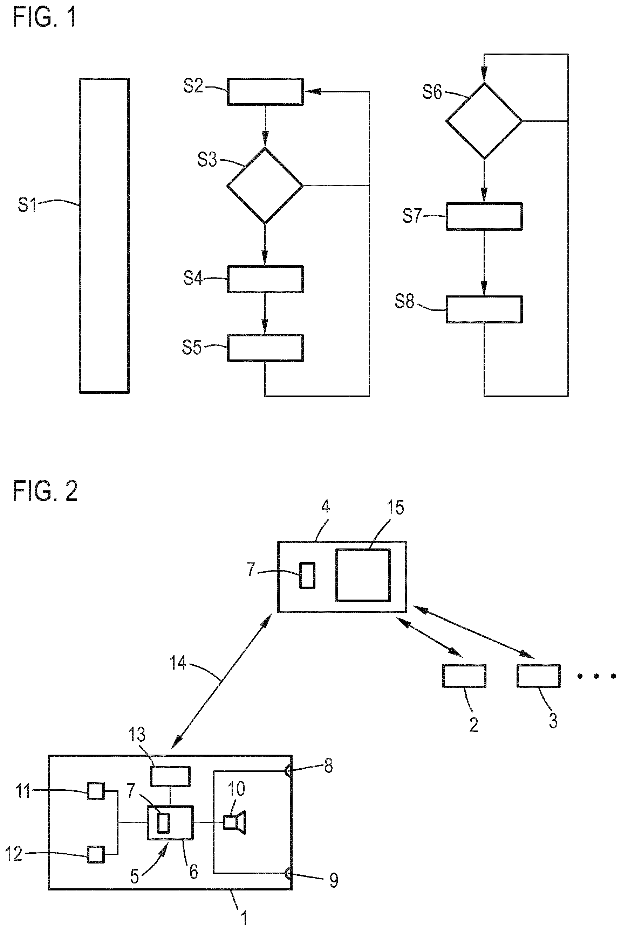

Fig. 1 zeigt ein Ablaufdiagramm eines Ausführungsbeispiels eines erfindungsgemäßen Verfahrens. Dieses wird zum Betrieb eines zur vollautomatischen Führung eines Kraftfahrzeugs ausgebildeten Fahrzeugsystems des Kraftfahrzeugs genutzt, wobei das Fahrzeugsystem in verschiedenen Fahrsituationsklassen, also unter unterschiedlichen Betriebsbedingungen bzw. zu unterschiedlichen Zwecken, genutzt werden kann. Idealerweise ist das Fahrzeugsystem zur vollautomatischen Führung des Kraftfahrzeugs in jeder üblichen Verkehrssituation, mithin allen im Verkehr üblichen Fahrsituationsklassen, ausgebildet. Fahrsituationsklassen definieren sich dabei vorliegend beispielhaft über eine Fahrumgebung (Stadtverkehr, Landstraße, Autobahnfahrt, ...), wie sie anhand einer aktuellen Positionsinformation aus einer digitalen Karte bestimmt werden kann, und einem Geschwindigkeitsintervall, welches beispielsweise genutzt werden kann, um Stausituationen auf der Autobahn von einem Hochgeschwindigkeitsbetrieb auf einer Autobahn unterscheiden zu können. Selbstverständlich sind auch weitere und/oder andere Fahrsituationsklassen denkbar, beispielsweise eine spezielle Fahrsituationsklasse für einen Einparkvorgang.

Die vollautomatische Führung des Kraftfahrzeugs wird durch den Schritt S1 in Fig. 1 angedeutet. In ihm wird eine Berechnungsstruktur genutzt, die Hardware- und/oder Softwarekomponenten enthalten kann und aus Fahrsituationsdaten Steuerdaten für andere Fahrzeugsysteme ermittelt, welche mithin eingesetzt werden, um die vollautomatische Führung des Kraftfahrzeugs zu realisieren. Mithin können Steuerdaten insbesondere Längsführungseingriffe, Querführungseingriffe und/oder sonstige Maßnahmen, beispielsweise eine Umparametrierung eines weiteren Fahrzeugsystems, beschreiben. Als Fahrsituationsdaten werden die Umgebung des Kraftfahrzeugs beschreibende Umgebungsdaten genauso verwendet wie Egodaten des Kraftfahrzeugs, die dessen aktuellen, insbesondere dynamischen Zustand beschreiben.

Die Berechnungsstruktur umfasst Auswertungseinheiten, die jeweils aus Eingangsdaten Ausgangsdaten ermitteln. Bei den Eingangsdaten kann es sich wenigstens teilweise um Fahrsituationsdaten und/oder wenigstens teilweise um Ausgangsdaten anderer Auswertungseinheiten handeln. Ausgangsdaten einer Auswertungseinheit können zum einen als Eingangsdaten für wenigstens eine andere Auswertungseinheit genutzt werden, zum anderen aber bereits Steuerdaten darstellen. Wenigstens ein Teil der Auswertungseinheiten ist als ein neuronales Netz ausgebildet, um künstliche Intelligenz zu nutzen. Die Realisierung erfolgt wenigstens teilweise softwarebasiert, wobei durchaus Mischformen denkbar sind, in denen eine speziell zur Realisierung eines neuronalen Netzes geeignete Hardware, beispielsweise ein neuronaler Chip, genutzt wird, welcher dann durch eine entsprechende, das konkret gewollte neuronale Netz umsetzende Software als Laufzeitumgebung genutzt wird.

Die vorliegende Erfindung befasst sich nun damit, nachdem nur eine maximale Anzahl von neuronalen Netzen gleichzeitig betrieben werden soll, dynamisch geeignete neuronale Netze als Auswertungseinheiten vorzuhalten. Dies geschieht konkret, indem in einem Schritt S2 eine aktuelle Fahrsituationsklasse bestimmt wird, was insbesondere selbst unter Verwendung von Fahrsituationsdaten (und gegebenenfalls Ausgangsdaten von Auswertungseinheiten) und/oder mittels eines neuronalen Netzes erfolgen kann. Vorliegend existieren für die Fahrsituationsklassen auch unterschiedliche Varianten für unterschiedliche Staaten, wobei die Befindlichkeit in einem Staat anhand einer aktuellen Positionsinformation, beispielsweise ermittelt über einen GPS-Sensor des Kraftfahrzeugs, leicht bestimmt werden kann. Ferner können sich Fahrsituationsklassen auch nach der Präsenz bestimmter Objekte in der Umgebung des Kraftfahrzeugs unterscheiden. Hierzu wird zweckmäßigerweise im Übrigen ein neuronales Netz zur Objekterkennung und -klassifizierung in der Berechnungsstruktur grundsätzlich aktiv gehalten, wobei dessen Ausgangsdaten bei der Bestimmung der Fahrsituationsklasse berücksichtigt werden. So kann beispielsweise unterschieden werden zwischen einer Fahrsituationsklasse "Stau auf Autobahn ohne Anwesenheit von Menschen" und "Stau auf Autobahn mit Anwesenheit von Menschen".

Wesentlich ist nun, dass jeder Fahrsituationsklasse bestimmte Auswertungsfunktionen zugeordnet sind, die in den Fahrsituationen bzw. Verkehrssituationen dieser Fahrsituationsklasse sinnvoll sind bzw. benötigt werden. Diese Auswertungsfunktionen, die den Fahrsituationsklassen zugeordnet sind, sollen durch dynamisch verfügbare neuronale Netze als Auswertungseinheiten realisiert werden. Hierzu existiert zu jeder Auswertungsfunktion ein Konfigurationsparametersatz in der Datenbank. Der Konfigurationsparametersatz kann genutzt werden, um aus einem Konfigurationsobjekt eine Auswertungseinheit zu bilden. Das Konfigurationsobjekt kann teilweise aus Hardware gebildet sein, beispielsweise einem neuronalen Chip, und/oder vollständig durch Software realisiert werden, wobei beispielsweise durch den Konfigurationsparametersatz eine Instanz eines Klassenobjekts (einer Rumpfstrukturklasse) erzeugt werden kann, die dann die Auswertungseinheit bildet und in die Berechnungsstruktur eingebunden wird.

Mithin wird in einem Schritt S3 überprüft, ob sich die Fahrsituationsklasse geändert hat. Ist dies nicht der Fall, wird sie weiterhin auf Änderungen überwacht. Bei einer Änderung der Fahrsituationsklasse jedoch werden im Schritt S4 die zu verwendenden Auswertungsfunktionen als Konfigurationsparametersätze aus der Datenbank abgerufen. In einem Schritt S5 werden nicht der Fahrsituationsklasse zugeordnete Auswertungsfunktionen realisierende neuronale Netze, mithin Auswertungseinheiten, deaktiviert, wobei zudem neu hinzukommende Auswertungseinheiten aus den Konfigurationsparametersätzen erzeugt und in Betrieb genommen werden.

In einem Beispiel werden dann, wenn der Fahrer eine Autobahn verlässt, somit vom Autobahnverkehr auf einen Landstraßenverkehr übergeht, neuronale Netze, die sich auf Parallelverkehr-Situationen mit verschiedenen Spuren beziehen, deaktiviert, wobei jedoch beispielsweise auf Gegenverkehr auf derselben Fahrbahn bezogene neuronale Netze aufgrund von Konfigurationsparametersätzen erzeugt und in Betrieb genommen werden können. Es sei an dieser Stelle noch angemerkt, dass selbstverständlich die Berechnungsstruktur an sich zur Laufzeit auch derart angepasst werden kann, dass die neuen, neuronalen Netze realisierenden Auswertungseinheiten in den Gesamtberechnungsvorgang für die Steuerdaten integriert werden.

Aufgrund der Berücksichtigung aktuell befahrener Staaten lässt sich auch die Variantenvielfalt unterschiedlicher Länder/geografischer Regionen abdecken, beispielsweise unterschiedliche Gesetzesregelungen, wobei selbstverständlich auch andere Ansätze der Variantenbildung verfolgt werden können, beispielsweise auch regionale Unterschiede, insbesondere in der Straßenkennzeichnung und dergleichen, berücksichtigt werden können. Auch Wetterbedingungen können zu einer Variantenunterscheidung führen und mithin in Fahrsituationsklassen integriert werden. Aufgrund der effektiven Speicherung in der Datenbank kann eine große Anzahl von Konfigurationsparametersätzen vorgehalten werden, mithin auch eine große Anzahl von Fahrsituationsklassen realisiert werden, die nicht nur basismäßig, wie im Beispiel dargelegt, nach Fahrumgebung und Geschwindigkeitsintervall aufgeschlüsselt sind, sondern zudem Varianten abdecken, beispielsweise Staaten, Regionen, Wetterbedingungen und dergleichen.

Wie aus Fig. 1 ersichtlich ist, findet der dynamische Aktualisierungsbetrieb ständig parallel zur vollautomatischen Fahrzeugführung statt; es kann also zyklisch oder kontinuierlich überwacht werden, ob sich die Fahrsituationsklasse ändert.

Fig. 1 zeigt jedoch auch eine weitere parallel ablaufende Schrittabfolge. Es findet nämlich während der vollautomatischen Fahrzeugführung eine weitere Überwachung statt, nämlich dahingehend, ob ein Fehler eingetreten ist, der einen Fahrereingriff nötig macht. Wird dies in einem Schritt S6 festgestellt, werden in einem Schritt S7 Daten für einen Fehlerdatensatz gesammelt, die vorliegend Fahrsituationsdaten, die aktuelle Konfiguration der Berechnungsstruktur, insbesondere also, welche neuronale Netze realisierenden Auswertungseinheiten aktiv sind, und den Eingriff des Fahrers beschreibende Eingriffsdaten umfasst. Dieser Fehlerdatensatz wird in einem Schritt S8 an eine zentrale Recheneinrichtung übertragen, in der auch wenigstens eine Kopie der Datenbank enthalten ist. Während es nämlich im Rahmen der vorliegenden Erfindung durchaus denkbar ist, Konfigurationsparametersätze über eine drahtlose Verbindung von einer auf der zentralen Recheneinrichtung abgespeicherten Datenbank abzurufen, ist es bevorzugt und in diesem Ausführungsbeispiel realisiert, dass Datenbanken sowohl im Kraftfahrzeug (falls die drahtlose Verbindung zu der kraftfahrzeugexternen, zentralen Recheneinrichtung ausfällt) als auch in der zentralen Recheneinrichtung vorzusehen, wobei die Datenbank im Kraftfahrzeug mit der Datenbank in der zentralen Recheneinrichtung synchronisiert wird.

Denn die Fehlerdatensätze, die in der zentralen Recheneinrichtung empfangen werden, werden dort gesammelt und bei Eintritt einer Trainingsbedingung, beispielsweise das Vorliegen einer bestimmten Anzahl von Fehlerdatensätzen bezüglich eines bestimmten genutzten neuronalen Netzes, eingesetzt, um das entsprechende neuronale Netz zu trainieren und somit zu aktualisieren. Dies ist besonders vorteilhaft möglich, nachdem mehrere erfindungsgemäß ausgestaltete Kraftfahrzeuge mit der zentralen Recheneinrichtung kommunizieren und ihre Fehlerdatensätze liefern können. Ein derart aktualisierter Konfigurationsparametersatz wird entsprechend an die Kraftfahrzeuge rückverteilt, so dass dort die aktuellste Version vorliegt.

Dabei kann der Lernprozess für die neuronalen Netze, der zur Aktualisierung des Konfigurationsparametersatzes führt, auf verschiedene Arten erreicht werden, wie dies im Stand der Technik grundsätzlich bekannt ist, beispielsweise durch eine Modifikation der Gewichte, eine Modifikation der Schwellwerte, eine Veränderung der Aktivierungsfunktionen, das Hinzufügen neuer Neuronen-Verbindungen bzw. das Löschen von Neuronen-Verbindungen und dergleichen. Es sei darauf hingewiesen, dass im Rahmen des Verfahrens auch neuronale Netze eingesetzt werden können, die sich während der Laufzeit intern aktualisieren können, beispielsweise durch Veränderung der Gewichte auf Basis der Aktivitäten anderer Neuronen und dergleichen.

Fig. 2 zeigt ein Komplettsystem, bestehend aus einer Fahrzeugflotte mit erfindungsgemäßen Kraftfahrzeugen 1, 2, 3, ... sowie einer kraftfahrzeugexternen, zentralen Recheneinrichtung 4, die als IT-Backend wirkt. Das Kraftfahrzeug 1, welches genauer dargestellt ist, weist wie die Kraftfahrzeuge 2 und 3 das zur vollautomatischen Führung des Kraftfahrzeugs ausgebildete Fahrzeugsystem 5 auf, in dessen Steuergerät 6 eine Datenbank 7 abgelegt ist, die Fahrsituationsklassen zugeordnete Konfigurationsparametersätze, wie beschrieben, enthält. Das Steuergerät 6 ist zur Durchführung des erfindungsgemäßen Verfahrens, wie es zu Fig. 1 beschrieben wurde, ausgebildet.

Hierzu ist das Steuergerät 6 über wenigstens ein Bussystem um einen mit Umgebungssensoren 8, 9, 10 des Kraftfahrzeugs 1 verbunden, zum anderen aber auch mit weiteren Fahrzeugsystemen 11, 12, die sowohl als Quellen für Fahrsituationsdaten dienen können als auch anzusteuernde Fahrzeugsysteme sein können. Insbesondere weist das Kraftfahrzeug 1 auch eine Kommunikationseinrichtung 13 auf, über die die drahtlose Verbindung 14 zu der zentralen Recheneinrichtung 4 aufgebaut werden kann.

Die Kraftfahrzeuge 2, 3 sind entsprechend wie das Kraftfahrzeug 1 ausgebildet.

Die Recheneinrichtung 4 weist ebenso eine aktuelle Kopie der Datenbank 7 auf, wobei zudem eine Speichereinrichtung 15 für die Fehlerdatensätze, die von den Kraftfahrzeugen 1, 2, 3 geliefert werden können, vorgesehen ist. Die Fehlerdatensätze können, wie bezüglich des Verfahrens beschrieben, zum Trainieren der neuronalen Netze und somit zum Aktualisieren der Konfigurationsparametersätze in der Datenbank 7 genutzt werden.

## Patentansprüche

1. Verfahren zum Betrieb eines zur vollautomatischen Führung eines Kraftfahrzeugs (1, 2, 3) in verschiedenen Fahrsituationsklassen ausgebildeten Fahrzeugsystems (5) des Kraftfahrzeugs (1, 2, 3), wobei
- eine mehrere Auswertungseinheiten umfassende Berechnungsstruktur verwendet wird, um aus die Umgebung des Kraftfahrzeugs (1, 2, 3) beschreibenden Umgebungsdaten und den Zustand des Kraftfahrzeugs (1, 2, 3) beschreibenden Egodaten als Fahrsituationsdaten zur vollautomatischen Führung des Kraftfahrzeugs (1, 2, 3) zu verwendende Steuerdaten zu ermitteln und zur Führung des Kraftfahrzeugs (1, 2, 3) zu verwenden,
- jede Auswertungseinheit aus Ausgangsdaten wenigstens einer weiteren Auswertungseinheit und/oder Fahrsituationsdaten Ausgangsdaten ermittelt, und
- wenigstens ein Teil der Auswertungseinheiten als neuronales Netz wenigstens teilweise auf Softwarebasis ausgebildet sind,
**dadurch gekennzeichnet,**
**dass** wenigstens ein Teil der als neuronales Netz ausgebildeten Auswertungseinheiten während der Laufzeit dynamisch aus einem über Konfigurationsparametersätze konfigurierbaren Konfigurationsobjekt gebildet wird, indem
- unter Verwendung wenigstens eines Teils der Fahrsituationsdaten eine aktuelle Fahrsituationsklasse aus mehreren vorgegebenen Fahrsituationsklassen, wobei jeder Fahrsituationsklasse wenigstens eine Auswertungsfunktion zugeordnet ist, ermittelt wird,
- aus einer Datenbank (7) den Auswertungsfunktionen der aktuellen Fahrsituationsklasse zugeordnete Konfigurationsparametersätze abgerufen werden und
- noch nicht vorhandene, die Auswertungsfunktion durchführende Auswertungseinheiten durch Konfiguration von Konfigurationsobjekten mit den abgerufenen Konfigurationsparametersätzen gebildet werden.

2. Verfahren nach Anspruch 1,
**dadurch gekennzeichnet,**
**dass** die Fahrsituationsklasse selbst durch ein neuronales Netz bestimmt wird.

3. Verfahren nach Anspruch 1 oder 2,
**dadurch gekennzeichnet,**
**dass** der aktuellen Fahrsituationsklasse nicht zugeordnete Auswertungsfunktionen ausführende, als neuronale Netze gebildete Auswertungseinheiten deaktiviert werden und/oder nur eine maximale Anzahl von auf neuronalen Netzen basierenden Auswertungseinheiten gleichzeitig aktiv sind.

4. Verfahren nach einem der vorangehenden Ansprüche,
**dadurch gekennzeichnet,**
**dass** wenigstens eine eine Basisfunktion durch ein neuronales Netz realisierende Auswertungseinheit immer aktiv ist.

5. Verfahren nach Anspruch 4,
**dadurch gekennzeichnet,**
**dass** die Basisfunktion eine Objekterkennungs- und/oder Klassifizierungsfunktion ist.

6. Verfahren nach einem der vorangehenden Ansprüche,
**dadurch gekennzeichnet,**
**dass** die Fahrsituationsklassen auch einen aktuell befahrenen Staat beschreiben und/oder wenigstens ein für wenigstens einen Staat spezifischer Konfigurationsparametersatz verwendet wird.

7. Verfahren nach einem der vorangehenden Ansprüche,
**dadurch gekennzeichnet,**
**dass** die Konfigurationsparametersätze aus der auf einer kraftfahrzeugexternen, zentralen Recheneinrichtung (4) liegenden Datenbank (7) abgerufen werden.

8. Verfahren nach einem der vorangehenden Ansprüche,
**dadurch gekennzeichnet,**
**dass** bei einem auf ein falsches Ergebnis einer Auswertungseinheit hinweisenden Fahrereingriff ein Fehlerdatensatz der aktuellen Verkehrssituation nach Abschluss der Verkehrssituation an eine oder die kraftfahrzeugexterne, zentrale Recheneinrichtung (4) übermittelt wird.

9. Verfahren nach Anspruch 8,
**dadurch gekennzeichnet,**
**dass** bei Erfüllung einer Trainingsbedingung die Fehlerdatensätze zum Trainieren des wenigstens einen in der Verkehrssituation genutzten neuronalen Netzes unter Aktualisierung des zugeordneten Konfigurationsparametersatzes verwendet werden.

10. Kraftfahrzeug (1, 2, 3), aufweisend ein zur vollautomatischen Führung des Kraftfahrzeugs (1, 2, 3) in verschiedenen Fahrsituationsklassen ausgebildetes Fahrzeugsystem (5) mit einem zur Durchführung eines Verfahrens nach einem der Ansprüche 1 bis 8 ausgebildeten Steuergerät (6).

## Claims

1. Method for operating a vehicle system (5) of a motor vehicle (1, 2, 3) designed for the fully automatic guiding of a motor vehicle (1, 2, 3) in different driving situation classes, wherein
- a calculating structure comprising a plurality of evaluation units is used in order to determine control data to be used from environmental data describing the environment of the motor vehicle (1, 2, 3) and ego data describing the state of the motor vehicle (1, 2, 3) as driving situation data for the fully automatic guiding of the motor vehicle (1, 2, 3) and use it for guiding the motor vehicle (1, 2, 3),
- each evaluation unit determines output data from at least one additional evaluation unit and/or driving situation, and
- at least one portion of the evaluation units are designed as a neural network at least partly on the basis of software,
**characterised in that**,
at least one portion of the evaluation units designed as a neural network is formed dynamically during the running time from a configuration object which can be configured by configuration parameter sets, **in that**
- by using at least a portion of the driving situation data a current driving situation class is determined from a plurality of predefined driving situation classes, wherein at least one evaluation function is assigned to each driving situation class,
- configuration parameter sets assigned to the evaluation functions of the current driving situation class are retrieved from a database (7) and
- not yet available evaluation units performing the evaluation function are formed by the configuration of configuration objects with the retrieved configuration parameter sets.

2. Method according to claim 1,
**characterised in that**
the driving situation class itself is determined by a neural network.

3. Method according to claim 1 or 2,
**characterised in that**
evaluation units in the form of neural networks which perform evaluation functions not assigned to the current driving situation class are deactivated and/or only a maximum number of evaluation units based on neural networks are active at the same time.

4. Method according to any of the preceding claims,
**characterised in that**
at least one evaluation unit performing a basic function by means of a neural network is always active.

5. Method according to claim 4,
**characterised in that**
the basic function is an object recognition and/or classification function.

6. Method according to any of the preceding claims,
**characterised in that**
the driving situation classes also describe a currently driven state and/or at least one configuration parameter set specific to at least one state is used.

7. Method according to any of the preceding claims,
**characterised in that**
the configuration parameter sets are retrieved from the database (7) on a central computer device (4) external to the motor vehicle.

8. Method according to any of the preceding claims,
**characterised in that**,
in case of an operation by the driver which indicates a false result of an evaluation unit, a defect dataset of the current traffic situation is transmitted after the traffic situation to a or to the central computer device (4) external to the motor vehicle.

9. Method according to claim 8,
**characterised in that**
after fulfilling a training condition the defect datasets are used for training the at least one neural network used in the traffic situation by updating the associated configuration parameter set.

10. Motor vehicle (1, 2, 3), having a vehicle system (5) designed for the fully automatic guiding of the motor vehicle (1, 2, 3) in different driving situation classes with a control device (6) designed for performing a method according to any of claims 1 to 8.

## Revendications

1. Procédé de fonctionnement d'un système de véhicule (5), conçu pour la conduite entièrement automatisée d'un véhicule automobile (1, 2, 3) dans différentes classes de situation de conduite, du véhicule automobile (1, 2, 3), dans lequel
- une structure de calcul comprenant plusieurs unités d'évaluation est utilisée pour déterminer à partir de données d'environnement décrivant l'environnement du véhicule automobile (1, 2, 3) et à partir d'égo-données décrivant l'état du véhicule automobile (1, 2, 3) des données de commande à utiliser en tant que données de situation de conduite en vue de la conduite entièrement automatisée du véhicule automobile (1, 2, 3) et pour les utiliser afin de conduire le véhicule automobile (1, 2, 3),
- chaque unité d'évaluation détermine des données de départ à partir de données de départ d'au moins une autre unité d'évaluation et/ou de données de situation de conduite, et
- au moins une partie des unités d'évaluation est conçue sous forme de réseau neuronal au moins en partie à base de logiciel,
**caractérisé en ce**
**qu'**au moins une partie des unités d'évaluation conçues sous forme de réseau neuronal est formée pendant la durée de parcours dynamiquement à partir d'un objet de configuration configurable par l'intermédiaire d'ensembles de paramètres de configuration, du fait
- **qu'**en utilisant au moins une partie des données de situation de conduite, on détermine une classe de situation de conduite actuelle parmi plusieurs classes de situation de conduite prédéterminées, au moins une fonction d'évaluation étant associée à chaque classe de situation de conduite,
- on extrait d'une base de données (7) des ensembles de paramètres de configuration associés aux fonctions d'évaluation de la classe de situation de conduite actuelle et
- on forme des unités d'évaluation encore inexistantes, effectuant la fonction d'évaluation, par configuration d'objets de configuration avec les ensembles de paramètres de configuration extraits.

2. Procédé selon la revendication 1,
**caractérisé en ce**
**que** la classe de situation de conduite elle-même est déterminée par un réseau neuronal.

3. Procédé selon la revendication 1 ou 2,
**caractérisé en ce**
**que** des unités d'évaluation qui exécutent des fonctions d'évaluation non associées à la classe de situation de conduite actuelle et qui sont formées sous forme de réseaux neuronaux sont désactivées et/ou seul un nombre maximal d'unités d'évaluation basées sur des réseaux neuronaux sont actives simultanément.

4. Procédé selon l'une quelconque des revendications précédentes,
**caractérisé en ce**
**qu'**au moins une unité d'évaluation réalisant une fonction de base par un réseau neuronal est toujours active.

5. Procédé selon la revendication 4,
**caractérisé en ce**
**que** la fonction de base est une fonction de reconnaissance d'objet et/ou de classification.

6. Procédé selon l'une quelconque des revendications précédentes,
**caractérisé en ce**
**que** les classes de situation de conduite décrivent un pays actuellement parcouru et/ou au moins un ensemble de paramètres de configuration spécifique à au moins un pays est utilisé.

7. Procédé selon l'une quelconque des revendications précédentes,
**caractérisé en ce**
**que** les ensembles de paramètres de configuration sont extraits de la base de données (7) située sur un ordinateur central (4) situé à l'extérieur du véhicule automobile.

8. Procédé selon l'une quelconque des revendications précédentes,
**caractérisé en ce**
**que**, en présence d'une intervention de conducteur indiquant un mauvais résultat d'une unité d'évaluation, un ensemble de données d'erreur de la situation de circulation actuelle est transmis, après la fin de la situation de circulation, à un ordinateur central ou à l'ordinateur central (4) situé à l'extérieur du véhicule automobile.

9. Procédé selon la revendication 8,
**caractérisé en ce**
**que**, lorsqu'une condition d'apprentissage est satisfaite, les ensembles de données d'erreur sont utilisés pour effectuer l'apprentissage de l'au moins un réseau neuronal utilisé dans la situation de circulation en actualisant l'ensemble de paramètres de configuration associé.

10. Véhicule automobile (1, 2, 3), présentant un système de véhicule (5) conçu pour la conduite entièrement automatisée du véhicule automobile (1, 2, 3) dans différentes classes de situation de conduite avec un appareil de commande (6) conçu pour la mise en oeuvre d'un procédé selon l'une quelconque des revendications 1 à 8.
